# EUROPÄISCHE PATENTSCHRIFT

(11) **EP 2 995 412 B1**
(45) Veröffentlichungstag und Bekanntmachung des Hinweises auf die Patenterteilung: **08.11.2017**
(21) Anmeldenummer: 14184331.8
(22) Anmeldetag: 10.09.2014
(51) Int. Cl.: B23K 20/12

(54) **REIBRÜHRSCHWEISSWERKZEUG**
FRICTION STIR WELDING TOOL
OUTIL DE SOUDAGE PAR FRICTION MALAXAGE

(43) Veröffentlichungstag der Anmeldung: 16.03.2016
(73) Patentinhaber: Helmholtz-Zentrum Geesthacht Zentrum für Material- und Küstenforschung GmbH, 21502 Geesthacht (DE)
(72) Erfinder: Hütsch, Leon Leander, 85368 Moosburg a. d. Isar (DE); Eckart, Jannes, 21073 Hamburg (DE); dos Santos, Jorge Fernandez, 21395 Tespe (DE)
(74) Vertreter: Bird & Bird LLP

(56) Entgegenhaltungen:
- EP-A1- 2 639 006
- WO-A1-2006/081819

## Beschreibung

Die vorliegende Erfindung betrifft ein Reibrührschweißwerkzeug, mit einem um eine Drehachse drehend antreibbaren Stift, wobei der Stift ein Antriebsende zur Kopplung mit einem Drehantrieb und ein freies Ende aufweist, wobei der Stift einen zylindrischen Eingriffsabschnitt zwischen dem Antriebsende und dem freien Ende aufweist, dessen Umfangsfläche zum Eingriff mit einem Werkstück vorgesehen ist, mit einem Schulterelement, das eine sich quer zu der Drehachse erstreckende Anlagefläche zum Eingriff mit einem Werkstück aufweist, die zu dem Eingriffsabschnitt weist.

Derartige Reibrührschweißwerkzeuge sind hinlänglich aus dem Stand der Technik bekannt, wobei damit Stumpfstoßverbindungen in der Weise sichergestellt werden können, dass die beiden Werkstücke zunächst entlang zweier Kanten aneinander angelegt werden und dann das Reibrührschweißwerkzeug, während es um die Drehachse drehend angetrieben wird, entlang des Bereichs der aneinander liegenden Kanten durch die Werkstücke bewegt wird, wobei dies dadurch ermöglicht wird, dass die Rotation des Werkzeugs dazu führt, dass das Material der Werkstücke in diesem Bereich plastifiziert wird. Dabei greift der Eingriffsabschnitt des Stifts anfänglich mit den Kanten der Werkstücke ein, während die erste und die zweite Anlagefläche jeweils auf der Oberseite und der Unterseite der Werkstücke mit diesen eingreifen.

So ist aus der WO 2006/081819 ein Reibrührschweißwerkzeug mit einem Stift sowie einer oberen und einer unteren Schulter bekannt, die an den Oberflächen der zu verschweißenden Werkstücke anliegen können, sodass diese Veröffentlichung den Stand der Technik beschreibt, von dem die vorliegende Erfindung ausgeht.

Aus der EP 2 639 069 A1 sind Reibrührschweißwerkzeuge bekannt, bei denen ein an einer Oberfläche der zu verschweißenden Werkstücke anliegendes Anlageelement über Lager an einem Stift gehaltert ist, der entlang des Stoßes zwischen den Werkstücken geführt ist.

Abhängig davon, ob auch die Anlageflächen bzw. die Schulterelemente, an denen diese vorgesehen sind, drehend angetrieben werden, kann zusätzlich über die Oberflächen Reibungsenergie in die Werkstücke eingebracht werden.

Dazu ist es aus dem Stand der Technik bekannt, insbesondere die auf der Seite des Antriebsendes des Eingriffsabschnitts vorgesehene obere Schulter unabhängig von dem Stift drehend anzutreiben, so dass sich die erste Anlagefläche gegensinnig oder gleichsinnig mit dem Stift drehen kann.

In diesem Zusammenhang ist Folgendes anzumerken. Wenn im Folgenden von einem "oberen" oder einem "unteren" Schulterelement die Rede ist, wird dabei immer vorausgesetzt, dass das Reibrührschweißwerkzeug so angeordnet ist, dass der Drehantrieb für den Stift oberhalb des Stifts angebracht ist. Die "obere Schulter" ist dann näher zu dem Drehantrieb angeordnet als eine ggfs. vorhandene "untere" Schulter, und insbesondere ist die "obere" Schulter näher zu dem Drehantrieb angeordnet als der Eingriffsabschnitt. Somit sind die Begriffe "oben" und "unten" so zu verstehen, dass sie eine Position relativ zu dem Drehantrieb angeben, wobei ein oberes Element näher zu dem Drehantrieb angeordnet ist als ein möglicherweise ebenfalls vorhandenes unteres Element. Die Begriffe "oben" und "unten" sollen also nicht notwendig die Lage im Raum angeben.

Während es sich konstruktiv als vergleichsweise einfach herausgestellt hat, die obere, benachbart zu dem Drehantrieb für den Stift angeordnete Schulter mit der daran vorgesehenen Anlagefläche unabhängig von dem Stift drehend anzutreiben, ist dies für eine Anlagefläche, die am von dem Drehantrieb entfernten unteren oder freien Ende des Stifts und damit auf der von dem Drehantrieb abgewandten Seite des Eingriffsabschnitts angeordnet ist, sehr schwierig. Hier kommen lediglich Hohlwellenanordnungen für den Stift in Frage, die kompliziert herzustellen sind und zudem häufig nicht die erforderliche Festigkeit aufweisen.

Allerdings ist es wünschenswert, dass das Drehmoment, das auf ein Schulterelement von dem Stift übertragen wird, das auf der von dem Drehantrieb abgewandten Seite des Eingriffsabschnitts vorgesehen ist, begrenzt werden kann, so dass die über die untere Anlagefläche eingebrachte Reibenergie ebenfalls begrenzt werden kann. Dabei ist es ferner wünschenswert, dass eine Einrichtung, die eine solche Begrenzung der über die Oberfläche eingebrachten Reibungsenergie ermöglicht, konstruktiv einfach aufgebaut und zuverlässig zu betreiben ist.

Allgemein ist daher ausgehend vom Stand der Technik die Aufgabe der vorliegenden Erfindung, ein Reibrührschweißwerkzeug bereitzustellen, bei dem die über ein Schulterelement mit einer quer zur Drehachse verlaufenden Anlagefläche eingebrachte Reibungsenergie in einfacher Weise begrenzt werden kann.

Erfindungsgemäß wird diese Aufgabe dadurch gelöst, dass das Schulterelement einen drehfest mit dem Stift verbundenen Reibblock aufweist, an dem eine erste, um die Drehachse umlaufende Reibfläche ausgebildet ist, dass ein erstes Schulterteil vorgesehen ist, das eine drehfest damit verbundene zweite, um die Drehachse umlaufende Reibfläche aufweist, dass die erste und die zweite Reibfläche derart angeordnet sind, dass sie einander gegenüber liegen, dass Vorspannmittel vorgesehen sind, welche die erste Reibfläche gegen die zweite Reibfläche vorspannen, und dass die Anlagefläche an dem ersten Schulterteil ausgebildet ist.

Somit ist bei der erfindungsgemäßen Lösung das Schulterteil, das auf einer Seite des Eingriffsabschnitts angeordnet ist, reibschlüssig mit dem Stift gekoppelt, so dass dann, wenn das zu übertragende Drehmoment einen vordefinierten Grenzwert überschreitet, welcher durch die Vorspannung der Vorspannmittel bestimmt ist, das Schulterteil nicht weiter drehend angetrieben wird. Dadurch wiederum wird die maximal in die Werkstückoberfläche einbringbare Reibungsenergie nach oben hin begrenzt. Dazu sind hier lediglich mechanische Komponenten erforderlich, nämlich die Vorspannmittel.

Vorzugsweise ist das Reibrührschweißwerkzeug mit einer sich quer zu der Drehachse erstreckenden zweiten Anlagefläche versehen, die zu der Anlagefläche am ersten Schulterteil weist, wobei der Eingriffsabschnitt zwischen den Anlageflächen angeordnet ist. In diesem Fall können Werkstücke zwischen den beiden Anlageflächen aufgenommen werden, sodass Reibungsenergie über beide Oberflächen der Werkstücke in diese eingebracht werden kann.

In einer weiteren bevorzugten Ausführungsform sind die erste und die zweite Reibfläche als geneigt zu der Drehachse und um die Drehachse umlaufende Flächen ausgebildet. Eine derartige Anordnung kann konstruktiv einfach realisiert werden, und die Vorspannung kann dann über eine axial wirkende Kraft erzeugt werden, so dass das Werkzeug insgesamt einen vergleichsweise geringen Raum einnimmt. In einer weiteren bevorzugten Ausführungsform ist die zweite Reibfläche an einem drehfest an und axial in Bezug auf die Drehachse relativ zu dem ersten Schulterteil verschiebbar gehalterten ersten Ringelement ausgebildet. Dies ermöglicht, dass das Schulterteil selbst axial unverschieblich an dem Stift gehaltert ist und die axiale Position in Bezug auf den Eingriffsabschnitt für die Anlagefläche fest vorgegeben ist.

In einem solchen Aufbau ist es weiter bevorzugt, wenn die Vorspannmittel als zwischen dem ersten Schulterteil und dem ersten Ringelement angeordnetes Federelement ausgebildet sind, wobei das Federelement das erste Ringelement axial in Bezug auf die Drehachse in Richtung des Reibblocks vorspannt.

In einer weiteren bevorzugten Ausführungsform kann die Anlagefläche an einem lösbar am ersten Schulterteil gehalterten Anlageelement ausgebildet sein. In diesem Fall muss bei Verschleiß im Bereich der Anlagefläche lediglich das Anlageelement ausgetauscht werden, wohingegen der übrige Aufbau, der die reibschlüssige Verbindung zwischen Stift und Anlagefläche bildet, nicht getauscht werden muss.

In einer weiteren bevorzugten Ausführungsform kann an dem Reibblock, der drehfest oder einstückig mit dem Stift ausgebildet sein kann, eine dritte, um die Drehachse umlaufende Reibfläche ausgebildet sein, wobei ein zweites Schulterteil vorgesehen ist, das eine drehfest damit verbundene vierte, um die Drehachse umlaufende Reibfläche aufweist, wobei die dritte und die vierte Reibfläche derart angeordnet sind, dass sie einander gegenüberliegen, und wobei Vorspannmittel vorgesehen sind, welche die dritte Reibfläche gegen die vierte Reibfläche vorspannen. Bei einer derartigen Anordnung können in axialer Richtung des Stifts gesehen auf beiden Seiten des Reibblocks Schulterteile angeordnet werden, deren Reibflächen dann in axialer Richtung jeweils gegen die Reibflächen an dem Reibblock vorgespannt werden. Eine derartige, symmetrische Anordnung arbeitet besonders zuverlässig, und es tritt nicht das Problem auf, dass es eines Widerlagers für die Vorspannmittel bedarf. Vielmehr stützen diese sich jeweils in einer Richtung an dem die zweite bzw. die vierte Reibfläche tragenden Element und andererseits an dem ersten und zweiten Schulterteil ab.

Bei dieser bevorzugten Ausführungsform können die dritte und die vierte Reibfläche als geneigt zu der Drehachse um die Drehachse umlaufende Flächen ausgebildet sein, wobei die vierte Reibfläche wiederum an einem drehfest, aber axial in Bezug auf die Drehachse relativ zu dem zweiten Schulterteil verschiebbar gehalterten zweiten Ringelement ausgebildet ist und wobei zwischen dem zweiten Schulterteil und dem zweiten Ringelement ein zweites Federelement vorgesehen ist, das das zweite Ringelement axial in Richtung auf den Reibblock vorspannt. Bei dieser Ausführungsform wird auch für das zweite Schulterteil eine kompakte Bauweise erreicht.

Im Folgenden wird die vorliegende Erfindung anhand einer Zeichnung erläutert, die zwei lediglich bevorzugte Ausführungsbeispiele zeigt, wobei
- Fig. 1: eine Reibrührschweißvorrichtung mit einem ersten Ausführungsbeispiel eines erfindungsgemäßen Reibrührschweißwerkzeugs zeigt,
- Fig. 2: das Reibrührschweißwerkzeug aus Fig. 1 in einer vergrößerten Darstellung zeigt,
- Fig. 3: eine Seitenansicht eines zweiten Ausführungsbeispiels eines erfindungsgemäßen Reibrührschweißwerkzeugs zeigt, und
- Fig. 4: einen Teil des Werkzeugs aus Fig. 3 in einer vergrößerten Darstellung zeigt.

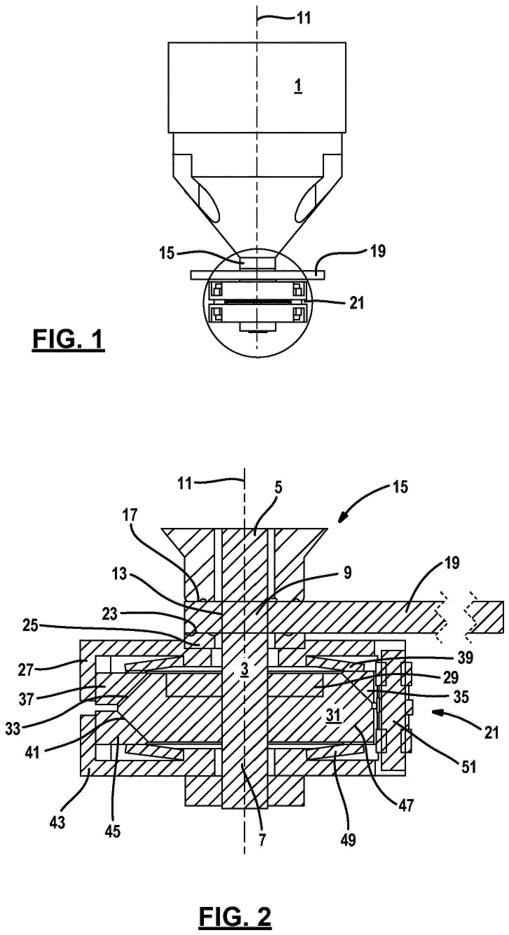

Das in Fig. 1 und 2 dargestellte erste Ausführungsbeispiel einer Reibrührschweißvorrichtung mit einem erfindungsgemäßen Reibrührschweißwerkzeug weist einen an einer Handhabungsvorrichtung (nicht dargestellt) vorgesehenen Antrieb 1 auf, mit dem ein Stift 3 des Reibrührschweißwerkzeugs drehend angetrieben werden kann, wobei ein Antriebsende 5 des Stifts 3 mit dem Antrieb 1 gekoppelt ist.

Zwischen dem Antriebsende 5 und einem davon entfernten freien Ende 7 des Stifts 3 ist ein Eingriffsabschnitt 9 an dem Stift 3 ausgebildet, der eine zylindrische Form hat und mit einer parallel zu der Drehachse 11 des Stifts 3 verlaufenden Eingriffsfläche 13 versehen ist. Im Bereich des Antriebsendes 5 des Stifts 3 ist ein erstes Schulterelement 15 vorgesehen, das den Stift 3 umgibt und eine quer und insbesondere senkrecht zu der Drehachse 11 verlaufende erste Anlagefläche 17 aufweist, die vorgesehen ist, an der Oberfläche eines Werkstücks 19 anzuliegen. Das erste Schulterelement 15 ist in diesem bevorzugten Ausführungsbeispiel getrennt von dem Stift 3 drehend um die Drehachse 11 angetrieben. Es ist aber auch denkbar, dass das erste Schulterelement 15 drehfest mit dem Stift 3 verbunden oder sogar einstückig damit ausgebildet ist, so dass es zusammen mit dem Stift 3 rotiert.

Auf der Seite des Eingriffsabschnitts 9, die dem ersten Schulterelement 15 mit der ersten Anlagefläche 17 gegenüberliegt, ist ein zweites Schulterelement 21 an dem Stift 3 angebracht, wobei das zweite Schulterelement 21 eine zu der ersten Anlagefläche 17 weisende zweite Anlagefläche 23 aufweist, die ebenfalls quer und insbesondere senkrecht zu der Drehachse 11 verläuft. Die zweite Anlagefläche 23 ist an einem Anlageelement 25 ausgebildet, das lösbar an einem ersten Schulterteil 27 angebracht ist.

Außerdem ist an dem Stift 3 drehfest über ein Eingriffselement 29 ein Reibblock 31 gehaltert, der eine geneigt zu der Drehachse 11 um diese umlaufende und nach außen weisende erste Reibfläche 33 aufweist. Der ersten Reibfläche 33 liegt eine zweite Reibfläche 35 gegenüber, die ebenfalls geneigt zu der Drehachse 11 verläuft und um diese umläuft, wobei die zweite Reibfläche 35 an einem ersten Ringelement 37 ausgebildet ist, das drehfest, aber axial in Richtung der Drehachse 11 verschieblich an dem ersten Schulterteil 27 gehaltert ist. Das erste Ringelement 37 wird von einer Tellerfeder 39, die sich an dem ersten Schulterteil 27 abstützt, in axialer Richtung hin zu dem Reibblock 31 vorgespannt, so dass auch die Reibflächen 33, 35 aufeinander zu vorgespannt sind.

Außerdem ist an dem Reibblock 31 eine dritte geneigt zu der Drehachse 11 verlaufende und um diese umlaufende Reibfläche 41 vorgesehen. Darüber hinaus ist an dem zweiten Schulterelement 21 ein zweites Schulterteil 43 vorgesehen, das axial verschiebbar, aber drehfest mit einem zweiten Ringelement 45 gekoppelt ist, an dem eine nach innen weisende und geneigt zu der Drehachse 11 verlaufende vierte Reibfläche 47 ausgebildet ist. Das zweite Ringelement 45 wird über eine zweite Tellerfeder 49 in axialer Richtung hin zu dem Reibblock 31 vorgespannt, so dass auch die dritte und vierte Reibfläche 41, 47 gegeneinander vorgespannt sind.

Schließlich sind das erste Schulterteil 27 und das zweite Schulterteil 43 über Bolzen 51, auf die Muttern aufgeschraubt sind, drehfest miteinander verbunden, und der axiale Abstand zwischen beiden wird durch die Bolzen 51 mit den darauf aufgeschraubten Muttern festgelegt. Darüber hinaus kann durch die Muttern die Vorspannung der Tellerfedern 39, 49 eingestellt werden, mit der dies Reibflächen 33, 35, 41, 47 gegeneinander vorspannen.

Mit dem ersten Ausführungsbeispiel eines erfindungsgemäßen Reibrührschweißwerkzeugs kann in der im Folgenden beschriebenen Weise eine Reibrührschweißnaht in dem Werkstück 19 hergestellt werden.

Der Eingriffsabschnitt 9 des Reibrührschweißwerkzeugs kommt zur Anlage mit einer Kante des Werkstücks 19, und die erste Anlagefläche 17 des ersten Schulterelements 15 liegt auf der oberen Oberfläche des Werkstücks 19 auf, während die zweite Anlagefläche 23 am zweiten Schulterelement 21 an der unteren Oberfläche des Werkstücks 19 anliegt.

Wenn der Stift 3 und das erste Schulterelement 15 drehend angetrieben werden, reibt einerseits die Eingriffsfläche 13 des Eingriffsabschnitts 9 an der Kante des Werkstücks 19, und andererseits reiben die erste Anlagefläche 17 und die zweite Anlagefläche 23 an der Oberfläche des Werkstücks 19, so dass Reibungsenergie in dieses eingebracht und der Bereich um das Reibrührschweißwerkzeug plastifiziert wird. Dadurch kann das Werkzeug weiter durch das Werkstück 19 bewegt und eine Reibrührschweißnaht erzeugt werden. Dies ist an sich bekannt.

Wenn das Drehmoment, das von dem Stift 3 auf das zweite Schulterelement 21 und damit die zweite Anlagefläche 23 übertragen wird, einen vordefinierten Grenzwert, der durch die Vorspannung der Tellerfedern 39, 49 bestimmt wird und damit durch den Bolzen und die Mutter eingestellt werden kann, überschritten wird, gleiten die Reibflächen 33, 35 sowie 41, 47 übereinander, so dass dann die Schulterteile 27, 43 und das am ersten Schulterteil 27 vorgesehene Anlageelement 25 nicht mehr mit rotieren, so dass zumindest über die zweite Anlagefläche 23 keine Reibungsenergie durch deren Rotation mehr in das Werkstück 19 eingebracht wird. Es verbleibt jedoch die Reibung durch die geradlinige Bewegung der zweiten Anlagefläche 23.

In dem hier beschriebenen Ausführungsbeispiel ist das von dem Drehantrieb 1 entfernte untere zweite Schulterelement 21 des Reibrührschweißwerkzeugs reibschlüssig mit dem Stift 3 gekoppelt. Es ist aber genauso denkbar, dass dies auch bei dem ersten oberen Schulterelement 15 der Fall ist und dies nicht unabhängig von dem Stift 3 angetrieben ist, sondern ebenfalls reibschlüssig mit dem Stift 3 verbunden wird. Außerdem ist es möglich, dass nur das erste obere Schulterelement reibschlüssig in der beschriebenen Weise mit dem Stift 3 gekoppelt ist, um so die über dieses Schulterelement eingebrachte Reibungsenergie zu begrenzen.

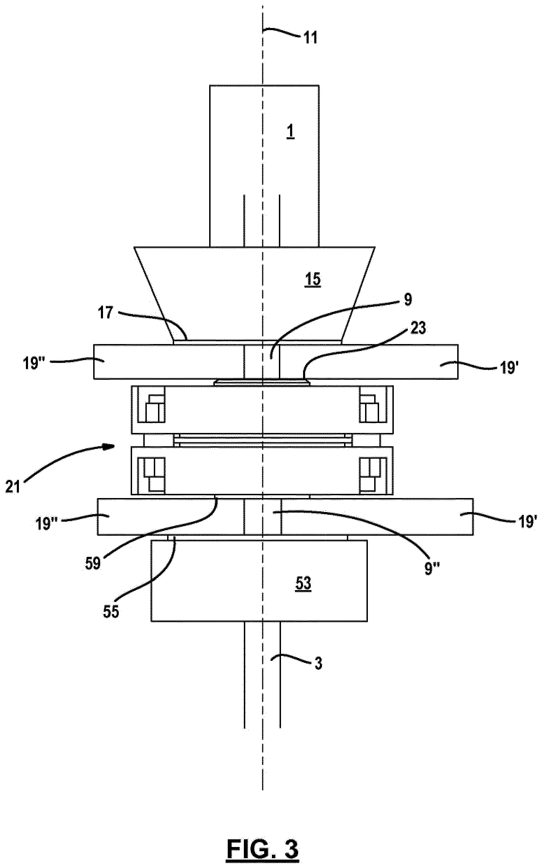

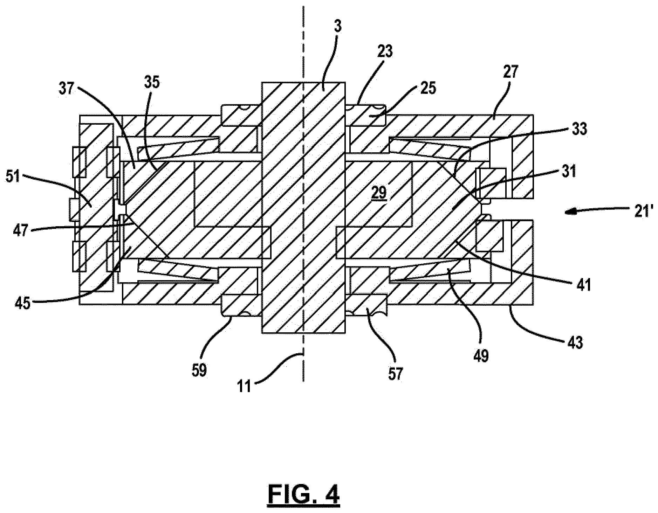

Das in den Fig. 3 und 4 dargestellte zweite Ausführungsbeispiel eines erfindungsgemäßen Reibrührschweißwerkzeugs ist vorgesehen, Kastenprofile mit einem ersten Werkstückabschnitt 19' und einem zweiten, parallel dazu verlaufenden Werkstückabschnitt 19" zu verschweißen.

Es ist ebenfalls mit einem Antrieb 1 für den Stift 3 verbunden, wobei der Stift 3 hier einen ersten Eingriffsabschnitt 9' und einen zweiten Eingriffsabschnitt 9" aufweist, an denen sich parallel zur Drehachse 11 erstreckende Eingriffsflächen ausgebildet sind. Drehfest an dem Stift 3 sind ein erstes Schulterelement 15 sowie ein drittes Schulterelement 53 vorgesehen, wobei an dem ersten Schulterelement 15 eine quer zur Drehachse 11 verlaufende und zu dem zweiten Eingriffsabschnitt 9' weisende erste Anlagefläche 17 ausgebildet ist. Analog ist an dem dritten Schulterelement 53 eine zu dem zweiten Eingriffsabschnitt 9" weisende und ebenfalls quer zur Drehachse 11 verlaufende dritte Anlagefläche 55 ausgebildet.

Die Anlageflächen 17, 55 sowie die Eingriffsabschnitte 9', 9" sind, wie bereits im Zusammenhang mit dem ersten Ausführungsbeispiel beschrieben, dazu vorgesehen, mit den Werkstückabschnitten 19', 19" zur Anlage zu kommen, so dass bei einem drehenden Antrieb des Stifts 3 durch den Antrieb 1 ein Reibkontakt sowohl der Anlageflächen 17, 55 als auch der Eingriffsabschnitte 9', 9" mit den Werkstückabschnitten 19', 19" zustande kommt.

Zwischen dem ersten Eingriffsabschnitt 9' und dem zweiten Eingriffsabschnitt 9" ist ein zweites Schulterelement 21 angeordnet, das auch hier reibschlüssig mit dem Stift 3 gekoppelt ist. Dazu ist das zweite Schulterelement 21', wie in Fig. 4 gezeigt, derart ausgebildet, dass es wieder einen drehfest über ein Eingriffselement 29 an dem Stift 3 gehalterten Reibblock 31 aufweist, der ringförmig um den Stift 3 herum verläuft. An dem Reibblock 31 ist eine erste, geneigt zur Drehachse 11 verlaufende, sich ringförmig um die Drehachse 11 herum erstreckende Reibfläche 33 ausgebildet. Außerdem ist an dem Reibblock 31 eine ebenfalls geneigt zur Drehachse 11 verlaufende und sich auch ringförmig um den Stift 3 herum erstreckende dritte Reibfläche 41 vorgesehen, wobei sowohl die erste Reibfläche 33 als auch die zweite Reibfläche 41 radial nach außen weg von der Drehachse 11 weisen.

Außerdem weist das zweite Schulterelement 21' ein erstes Schulterteil 27 auf, das ringförmig um den Stift 3 herum angeordnet ist und das die an einem lösbar daran gehalterten ersten Anlageelement 25 ausgebildete zweite Anlagefläche 23 aufweist, die sich auch hier quer und insbesondere senkrecht zur Drehachse 11 erstreckt. Außerdem ist an dem ersten Schulterteil 27 in axialer Richtung in Bezug auf die Drehachse 11 verschiebbar, aber drehfest daran gehaltert, ein erstes Ringelement 37 vorgesehen, das eine zweite Reibfläche 35 aufweist, die geneigt zu der Drehachse 11 verläuft und der ersten Reibfläche 33 gegenüberliegt. Schließlich ist zwischen dem ersten Schulterteil 27 und dem ersten Ringelement 37 eine erste Tellerfeder 39 vorgesehen, die das erste Ringelement 37 in axialer Richtung in Bezug auf die Drehachse 11 derart vorspannt, dass die erste und die zweite Reibfläche 33, 35 mit einer durch die Verformung der ersten Tellerfeder 39 vorgegebenen Vorspannung gegeneinander gedrückt werden.

Außerdem weist das zweite Schulterelement 21' ein zweites Schulterteil 43 auf, das ebenfalls ringförmig um den Stift 3 herum angeordnet ist und an dem über ein lösbar daran gehaltertes zweites Anlageelement 57 eine vierte Anlagefläche 59 ausgebildet ist. Ebenfalls axial in Bezug auf die Drehachse 11 verschiebbar, aber drehfest an dem zweiten Schulterteil 43 gehaltert, ist ein zweites Ringelement 45 an dem zweiten Schulterteil 43 vorgesehen, wobei das zweite Ringelement 45 eine vierte, geneigt zur Drehachse 11 verlaufende und sich ringförmig darum erstreckende Reibfläche 47 aufweist. Dabei liegt die vierte Reibfläche 47 der zweiten, an dem Reibblock 31 ausgebildeten Reibfläche 35 gegenüber, und das zweite Ringelement 45 wird durch eine zweite Tellerfeder 49 in axialer Richtung hin zu dem Reibblock 31 vorgespannt.

Schließlich werden die Schulterteile 27, 43 auch hier durch Gewindebolzen 51 und darauf aufgeschraubte Muttern gegeneinander gespannt, so dass dadurch die Vorspannung vorgegeben wird, die die Tellerfedern 39, 49 auf die Ringelemente 37, 45 ausüben, wodurch wiederum die Stärke des Reibschlusses zwischen den Ringelementen 37, 45 und dem Reibblock 31 eingestellt werden kann.

Bei dem zweiten, in den Fig. 3 und 4 gezeigten Ausführungsbeispiel eines Reibrührschweißwerkzeugs werden beim Verschweißen zweier Werkstückabschnitte 19', 19" zu einem kastenförmigen Profil die erste und die dritte Anlagefläche 17, 55 in Anlage mit den nach außen weisenden Oberflächen der Werkstückteile 19', 19" gebracht, wobei durch den drehenden Antrieb des ersten und des dritten Schulterelements 15, 53 aufgrund der drehfesten Verbindung mit dem Stift 3 Reibungswärme in den Werkstückabschnitten 19', 19" auch im Bereich von deren nach außen weisenden Oberflächen erzeugt wird. Darüber hinaus liegen die zweite und die vierte Anlagefläche 23, 59 des zweiten Schulterelements 21' an den nach innen weisenden Oberflächen der Werkstückabschnitte 19', 19" an, wobei aber aufgrund der gewählten Vorspannung der Tellerfedern 39, 49 nur ein vorgegebenes Drehmoment von dem Stift 3 auf die Anlageflächen 23, 59 übertragen werden kann, da hier eine reibschlüssige Verbindung vorliegt.

Damit wiederum ist auch hier die maximal von dem zweiten Schulterelement 21' übertragene Reibungsenergie begrenzt, so dass dadurch einerseits der Wärmeeintrag in die Werkstückabschnitte 19', 19" und andererseits auch die Belastung des Stifts 3 aufgrund der Drehmomentübertragung auf das zweite Schulterelement 21' begrenzt sind.

Insgesamt wird bei den beschriebenen Ausführungsbeispielen jeweils die über ein Schulterelement 21, 21' eingebrachten Reibungsenergie durch den reibschlüssigen eingreifen zwischen dem Stift 3 und einem Teil des Schulterelements begrenzt. Ein derartiger Aufbau kann einfach realisiert werden und arbeitet überaus zuverlässig.

## Patentansprüche

1. Reibrührschweißwerkzeug, mit einem um eine Drehachse (11) drehend antreibbaren Stift (3),
wobei der Stift (3) ein Antriebsende (5) zur Kopplung mit einem Drehantrieb (1) und ein freies Ende (7) aufweist,
wobei der Stift (3) einen zylindrischen Eingriffsabschnitt (9, 9', 9") zwischen dem Antriebsende (5) und dem freien Ende (7) aufweist, dessen Umfangsfläche zum Eingriff mit einem Werkstück (19, 19', 19") vorgesehen ist,
mit einem Schulterelement (21, 21'), das eine sich quer zu der Drehachse (11) erstreckende Anlagefläche (23) zum Eingriff mit einem Werkstück (19, 19', 19") aufweist, die zu dem Eingriffsabschnitt (9, 9', 9") weist,
**dadurch gekennzeichnet,**
**dass** das Schulterelement (21, 21') einen drehfest mit dem Stift verbundenen Reibblock (31) aufweist, an dem eine erste, um die Drehachse (11) umlaufende Reibfläche (33) ausgebildet ist,
**dass** ein erstes Schulterteil (27) vorgesehen ist, das eine drehfest damit verbundene zweite, um die Drehachse (11) umlaufende Reibfläche (35) aufweist,
**dass** die erste und die zweite Reibfläche (33, 35) derart angeordnet sind, dass sie einander gegenüber liegen,
**dass** Vorspannmittel (39, 49) vorgesehen sind, die die erste Reibfläche (33) gegen die zweite Reibfläche (35) vorspannen, und
**dass** die Anlagefläche (23) an dem ersten Schulterteil (27) ausgebildet ist.

2. Reibrührschweißwerkzeug nach Anspruch 1, wobei die erste und die zweite Reibfläche (33, 35) als geneigt zu der Drehachse (11) um die Drehachse (11) umlaufende Flächen ausgebildet sind.

3. Reibrührschweißwerkzeug nach Anspruch 1 oder 2, wobei die zweite Reibfläche (35) an einem drehfest an und axial in Bezug auf die Drehachse (11) relativ zu dem ersten Schulterteil (27) verschiebbar gehalterten ersten Ringelement (37) ausgebildet ist.

4. Reibrührschweißwerkzeug nach Anspruch 3, wobei die Vorspannmittel als zwischen dem ersten Schulterteil (27) und dem ersten Ringelement (37) angeordnetes Federelement (39) ausgebildet sind, das das erste Ringelement (37) axial in Bezug auf die Drehachse (11) in Richtung des Reibblocks (31) vorspannt.

5. Reibrührschweißwerkzeug nach einem der Ansprüche 1 bis 4, wobei die Anlagefläche (23) an einem lösbar am ersten Schulterteil (27) gehalterten Anlageelement (25) ausgebildet ist.

6. Reibrührschweißwerkzeug nach einem der Ansprüche 1 bis 5, wobei an dem Reibblock (31) eine dritte, um die Drehachse (11) umlaufende Reibfläche (41) ausgebildet ist,
wobei ein zweites Schulterteil (43) vorgesehen ist, das eine drehfest damit verbundene vierte, um die Drehachse umlaufende Reibfläche (47) aufweist,
wobei die dritte und die vierte Reibfläche (41, 47) derart angeordnet sind, dass sie einander gegenüber liegen, und
wobei Vorspannmittel (39, 49) vorgesehen sind, die die dritte Reibfläche (41) gegen die vierte Reibfläche (47) vorspannen.

7. Reibrührschweißwerkzeug nach Anspruch 6, wobei die dritte und die vierte Reibfläche (41, 47) als geneigt zu der Drehachse (11) um die Drehachse (11) umlaufende Flächen ausgebildet sind,
wobei die vierte Reibfläche (47) an einem drehfest an und axial in Bezug auf die Drehachse (11) relativ zu dem zweiten Schulterteil (43) verschiebbar gehalterten zweiten Ringelement (45) ausgebildet ist und der dritten Reibfläche (41) gegenüber liegt,
wobei zwischen dem zweiten Schulterteil (43) und dem zweiten Ringelement (45) ein zweites Federelement (49) vorgesehen ist, das das zweite Ringelement (45) axial in Bezug auf die Drehachse (11) in Richtung des Reibblocks (31) vorspannt.

8. Reibrührschweißwerkzeug nach einem der Ansprüche 1 bis 7, mit einer sich quer zu der Drehachse (11) erstreckenden zweiten Anlagefläche (17), die zu der Anlagefläche (23) am ersten Schulterteil (27) weist,
wobei der Eingriffsabschnitt (9) zwischen den Anlageflächen (23, 17) angeordnet ist.

## Claims

1. A friction stir welding tool, comprising a pin (3) which can be driven rotationally about an axis of rotation (11), wherein the pin (3) has a drive end (5) for coupling to a rotary drive (1) and has a free end (7),
wherein the pin (3) has a cylindrical engagement section (9, 9', 9") between the drive end (5) and the free end (7), the circumferential surface of which is provided for engagement with a workpiece (19, 19', 19"), comprising a shoulder element (21, 21') having an abutment surface (23) extending perpendicular to the axis of rotation (11) for engagement with a workpiece (19, 19', 19"), which faces the engagement section (9, 9', 9"), **cha**
**racterized in**
that the shoulder element (21, 21') has a friction block (31), which is connected in a rotationally fixed manner to the pin and on which a first friction surface (33) is formed surrounding the axis of rotation (11),
that a first shoulder part (27) is provided, which has a second friction surface (35) surrounding the axis of rotation (11), which is non-rotatably connected thereto,
that the first and second friction surfaces (33, 35) are arranged such that they lie opposite one another,
that biasing means (39, 49) are provided which bias the first friction surface (33) against the second friction surface (35), and
that the abutment surface (23) is formed on the first shoulder part (27).

2. The friction stir welding tool according to claim 1,
wherein the first and the second friction surfaces (33, 35) are designed as surfaces surrounding the axis of rotation (11) inclined towards the axis of rotation (11).

3. The friction stir welding tool according to claim 1 or 2,
wherein the second friction surface (35) is formed on a first ring element (37) displaceable relative to the first shoulder part (27) in a rotationally fixed manner and axially displaceable relative to the axis of rotation relative to the first shoulder part (27).

4. The friction stir welding tool according to claim 3,
wherein the biasing means is designed as a spring element (39) arranged between the first shoulder part (27) and the first ring element (37), which axially biases the first ring element (37) with respect to the axis of rotation (11) in the direction of the friction block (31).

5. The friction stir welding tool according to one of the claims 1 to 4, wherein the abutment surface (23) is formed on an abutment element (25), which is detachably fastened on the first shoulder part (27).

6. The friction stir welding tool according to one of the claims 1 to 5, wherein a third friction surface (41) surrounding the axis of rotation (11) is formed on the friction block (31),
wherein a second shoulder part (43) is provided, which has a fourth friction surface (47) surrounding the rotational axis, which is non-rotatably connected thereto,
wherein the third and fourth friction surfaces (41, 47) are arranged such that they lie opposite one another, and
wherein biasing means (39, 49) are provided, which bias the third friction surface (41) against the fourth friction surface (47).

7. The friction stir welding tool according to claim 6, wherein the third and the fourth friction surfaces (41, 47) are designed as surfaces surrounding the axis of rotation (11) inclined towards the axis of rotation (11),
wherein the fourth friction surface (47) is formed on a second ring element (45) displaceable relative to the second shoulder part (43) in a rotationally fixed manner and axially displaceable relative to the axis of rotation (11) relative to the second shoulder part and faces the third friction surface (41),
wherein a second spring element (49) is provided between the second shoulder part (43) and the second ring element (45), which axially biases the second ring element (45) with respect to the axis of rotation (11) in the direction of the friction block (31).

8. The friction stir welding tool according to one of the claims 1 to 7, having a second abutment surface (17) extending perpendicular to the axis of rotation (11) and facing the abutment surface (23) on the first shoulder part (27),
wherein the engagement section (9) is arranged between the abutment surfaces (23, 17).

## Revendications

1. Outil de soudage par friction-malaxage comprenant une tige (3) entraînée en rotation autour d'un axe de rotation (11),
la tige (3) présentant une extrémité d'entraînement (5) destinée à s'accoupler avec un entraînement rotatif (1) et une extrémité libre (7),
la tige (3) présentant un segment de contact cylindrique (9, 9', 9'') entre l'extrémité d'entraînement (5) et l'extrémité libre (7),
dont la surface circonférentielle sert à entrer en contact avec une pièce (19, 19', 19"),
comprenant un élément d'épaulement (21, 21') qui présente une surface d'appui (23) s'étendant transversalement à l'axe de rotation (11) pour entrer en contact avec une pièce (19, 19', 19"), qui s'oriente vers le segment de contact (9, 9', 9"), **caractérisé en ce que**
l'élément d'épaulement (21, 21') présente un bloc de friction (31) relié solidaire en rotation à la tige, sur lequel est formée une première surface de friction (33) tournant autour de l'axe de rotation (11),
**en ce qu'**une première partie d'épaulement (27) présente une deuxième surface de friction (35) reliée solidaire en rotation à celle-ci tournant autour de l'axe de rotation (11),
**en ce que** la première et la deuxième surface de friction (33, 35) sont disposées de telle sorte qu'elles soient en regard l'une de l'autre,
**en ce que** des moyens de précontrainte (39, 49) pré-contraignent la première surface de friction (33) contre la deuxième surface de friction (35), et
**en ce que** la surface d'appui (23) est conçue sur la première partie d'épaulement (27).

2. Outil de soudure par friction-malaxage selon la revendication 1, la première et la deuxième surface de friction (33, 35) sont conçues comme des surfaces inclinées par rapport à l'axe de rotation (11) tournant autour de l'axe de rotation (11).

3. Outil de soudure par friction-malaxe selon la revendication 1 ou la revendication 2, la deuxième surface de friction (35) est conçue sur un premier élément annulaire (37) solidaire en rotation et maintenu coulissant axialement par rapport à l'axe de rotation (11) relativement à la première partie d'épaulement (27).

4. Outil de soudure par friction-malaxage selon la revendication 3, les moyens de précontrainte conçus comme un élément de ressort (39) étant disposé entre la première partie d'épaulement (27) et le première élément annulaire (37), ledit élément de ressort précontraint le premier élément annulaire (37) axialement par rapport à l'axe de rotation (11) en direction du bloc de friction (31).

5. Outil de soudure friction-malaxe selon l'une des revendications 1 à 4, la surface d'appui (23) est conçue sur un élément d'appui (25) maintenu amovible sur la première partie d'épaulement (27).

6. Outil de soudure par friction-malaxage selon l'une des revendications 1 à 5, sur le bloc de friction (31) étant conçue une troisième surface de friction (41) tournant autour de l'axe de rotation (11),
une seconde partie d'épaulement (43) présentant une quatrième surface de friction (47) solidaire en rotation avec celle-ci tournant autour de l'axe de rotation,
la troisième et la quatrième surface de friction (41, 47) étant disposées de telle sorte qu'elles soient en regard l'une de l'autre, et les moyens (39, 49) précontraignant la troisième surface de friction (41) contre la quatrième surface de friction (47).

7. Outil de soudure par friction-malaxage selon la revendication 6, la troisième et la quatrième surface de friction (41, 47) étant conçues comme des surfaces inclinées par rapport à l'axe de rotation (11) tournant autour de l'axe de rotation (11),
la quatrième surface d'appui (47) étant conçue sur un second élément annulaire (45) solidaire en rotation et maintenu coulissant axialement par rapport à l'axe de rotation (11) relativement à la seconde partie d'épaulement (43) et faisant face à la troisième surface de friction (41),
entre la seconde partie d'épaulement (43) et le second élément annulaire (45) étant disposé un second élément de ressort (49), qui précontraint le second élément annulaire (45) axialement par rapport à l'axe de rotation (11) en direction du bloc de friction (31).

8. Outil de soudure par friction-malaxage selon l'une des revendications 1 à 7, comprenant une seconde surface d'appui (17) s'étendant transversalement à l'axe de rotation (11), laquelle s'oriente vers la surface d'appui (23) sur la première partie d'épaulement (27), la partie de contact (9) étant disposée entre les surfaces d'appui (23, 17).
